# EUROPÄISCHE PATENTSCHRIFT

(11) **EP 4 237 186 B1**
(45) Veröffentlichungstag und Bekanntmachung des Hinweises auf die Patenterteilung: **10.06.2026**
(21) Anmeldenummer: 21790823.5
(22) Anmeldetag: 07.10.2021
(51) Int. Cl.: B23K 26/38, B23K 26/40, G02B 6/02, B23K 26/06

(54) **VERFAHREN UND VORRICHTUNG ZUM LASERSCHNEIDEN MITTELS EINES IN EINER MULTIKERNFASER GEFÜHRTEN LASERSTRAHLS SOWIE ZUGEHÖRIGES COMPUTERPROGRAMMPRODUKT**
METHOD AND DEVICE FOR LASER CUTTING BY MEANS OF A LASER BEAM GUIDED IN A MULTICORE FIBRE, AND ASSOCIATED COMPUTER-PROGRAM PRODUCT
PROCÉDÉ ET DISPOSITIF DE DÉCOUPE AU LASER AU MOYEN D'UN FAISCEAU LASER GUIDÉ DANS UNE FIBRE MULTICOEUR, ET PRODUIT-PROGRAMME INFORMATIQUE ASSOCIÉ

(30) Priorität: 27.10.2020 DE 102020128186
(43) Veröffentlichungstag der Anmeldung: 06.09.2023
(73) Patentinhaber: TRUMPF Werkzeugmaschinen SE + Co. KG, 71254 Ditzingen (DE)
(72) Erfinder: HÄCKER, Tobias, 71254 Ditzingen (DE); PANG, Hao, 71254 Ditzingen (DE)
(74) Vertreter: Trumpf Patentabteilung
(86) Internationale Anmeldenummer: PCT/EP2021/077767
(87) Internationale Veröffentlichungsnummer: WO 2022/089910

(56) Entgegenhaltungen:
- DE-U1- 20 308 097
- US-A1- 2016 062 036
- US-A1- 2019 383 998

## Beschreibung

Die vorliegende Erfindung betrifft ein Verfahren und eine Vorrichtung zum Laserschneiden von Werkstücken mittels mindestens eines Laserstrahls, der in einer Multikernfaser, welche mehrere, insbesondere mindestens drei, parallel, entlang einer geraden Linie nebeneinander angeordnete Faserkerne aufweist, in Richtung zu einem Werkstück geführt wird, sowie auch ein zugehöriges Computerprogrammprodukt.

Ein derartiges Verfahren und derartige Vorrichtung sind beispielsweise aus der US 2018/0217408 A1 bekannt geworden.

Eine Möglichkeit zur Steigerung der Prozesseffizienz und der Kantenqualität beim Laserschneiden stellt die Formung des Intensitätsprofils im fokussierten Strahl dar, beispielsweise in Form einer in Vorschubrichtung ausgerichteten Linie oder mehrerer in der Fokusebene zueinander versetzter Teilstrahlen.

Aus US 2018/0217408 A1 und WO 2014/060091 A1 ist es bekannt, beim Schneiden oder Schweißen zwischen dem Laser und dem Bearbeitungskopf der Lasermaschine eine Transportfaser mit zwei linear versetzten Faserkernen unterschiedlichen Durchmessers einzusetzen. Die aus den einzelnen Faserkernen austretenden (Teil-)Strahlen werden durch die optischen Elemente im Bearbeitungskopf in mehreren Fokuspunkten (Multispots) auf dem Werkstück abgebildet.

Aus DE 10 2015 010 892 A1 und US 2018/0185960 A1 sind Multikernfasern mit ringförmig angeordneten Faserkernen unterschiedlichen Durchmessers bekannt. In US 2018/0185960 A1 wird vorgeschlagen, die aus den unterschiedlichen Faserkernen austretenden Strahlen zu überlagern und gemeinsam in einem "Single Spot" auf dem Werkstück abzubilden oder die Strahlen mittels eines Dove-Prismas zu drehen und damit das Strahlprofil an die Bearbeitungsrichtung anzupassen.

Aus WO 2016/025701 A1 ist es bekannt, ein "Mickey Maus" Strahlprofil mit parallelen Fasern mit unterschiedlichem Kerndurchmesser zu erzeugen.

DE 203 08 097 U1 (offenbarend den Oberbegriff der Ansprüche 1 und 8) und US 10,401,562 B2 zeigen Vorrichtungen zur Lasermaterialbearbeitung, die eine Faser mit mehreren, eindimensional als Linie oder zweidimensional als Feld in der Transportfaser angeordneten Faserkernen aufweisen. Bei der Materialbearbeitung kann der Laserstrahl dynamisch, d.h. zeitlich variabel, in die einzelnen Faserkerne eingekoppelt werden, so dass sich eine Scanbewegung des ausgekoppelten Strahls ergibt.

Aus JP 2003290965 A ist es bekannt, den Laserstrahl mit einem Faserbündel zum Bearbeitungskopf zu übertragen. Die einzelnen Fasern sind parallel angeordnet und weisen in z-Richtung versetzte Faserenden auf. So können im Werkstück mehrere horizontal und vertikal versetzte Strahlfokusse erzeugt werden.

Demgegenüber stellt sich der vorliegenden Erfindung die Aufgabe, ein Verfahren der eingangs genannten Art dahingehend weiterzubilden, dass das Strahlprofil eines Laserstrahls besonders gut für das Laserschneiden metallischer Werkstücke angepasst werden kann, sowie eine zum Durchführen des Verfahrens geeignete Vorrichtung anzugeben.

Diese Aufgabe wird bei dem eingangs genannten Verfahren erfindungsgemäß (siehe Anspruch 1) dadurch gelöst, dass die Zahl der Faserkerne, in die der mindestens eine Laserstrahl eingekoppelt wird, und/oder die Aufteilung der Laserleistung des mindestens einen Laserstrahls auf die Faserkerne in Abhängigkeit von einer Werkstückeigenschaft (wie z.B. Dicke, Material, Oberflächenbeschaffenheit, ...) eingestellt wird. Entsprechend der Erfindung wird der mindestens eine Laserstrahl in mehrere der Faserkerne eingekoppelt, um mehrere aus der Multikernfaser austretende Ausgangslaserstrahlen zu erzeugen, deren Strahlachsen in einer Ebene verlaufen und auf dem Werkstück in einer geraden Linie angeordnet sind, und während der Laserbearbeitung wird die gerade Linie der Ausgangslaserstrahlen jeweils in diejenige Richtung gedreht, in der sich der Laserstrahl auf dem Werkstück bewegt.

Die Aufteilung des mindestens einen Laserstrahls auf die verschiedenen Faserkerne kann beispielsweise durch hintereinander im Strahlengang des Eingangslaserstrahls angeordnete Keilplatten, wie sie beispielsweise in WO 2011/124671 A1 (Fig. 3) gezeigt sind, erfolgen. Alternativ können verschiedene Module eines Faserlasers über einzelne Übertragungsfasern ("feed fibers") an die Faserkerne der Mehrkernfaser gespleißt werden, wie es beispielsweise in WO 2014/118516 A1 gezeigt ist. Erfindungsgemäß kann ein einziger Laserstrahl nach entsprechender Strahlteilung oder aber mehrere, insbesondere unterschiedliche, Laserstrahlen in die Faserkerne eingekoppelt werden.

Die Zahl der Faserkerne, in die Laserstrahlung eingekoppelt wird, wird entsprechend der Erfindung in Abhängigkeit von der Werkstückdicke verändert. Erfindungsgemäß wurde erkannt, dass zur Verbesserung der Produktivität des Schneidprozesses und der Schneidqualität die Länge der aus den einzelnen (Teil-)Laserstrahlen gebildeten Linie veränderbar sein muss, um an die Werkstückdicke angepasst werden zu können. Ziel ist es dabei, einen maximalen Absorptionsgrad der Laserstrahlung auf der gesamten geneigten Schneidfront zu erreichen. Auch die Verteilung der Laserleistung in den Faserkernen wird entsprechend der Erfindung als Alternative in Abhängigkeit von der Werkstückdicke geändert.

Mit zunehmender Werkstückdicke wird die Laserleistung des mindestens einen Laserstrahls bevorzugt auf eine steigende Zahl von Faserkernen und zunehmend in die entlang der geraden Linie außenliegenden Faserkerne eingekoppelt.

In einer bevorzugten Verfahrensvariante weisen alle Faserkerne den gleichen Durchmesser auf und sind in möglichst geringem Abstand zueinander (z.B. 10 µm) angeordnet. Jeder Faserkern erzeugt über eine herkömmliche Abbildungsoptik im Bearbeitungskopf (Kollimations- und Fokussierlinse oder Zoom-Teleskop) im Bildbereich einen separaten Fokuspunkt (Spot). Durch die Einkopplung von Laserstrahlung mit variabler Leistungsaufteilung in die einzelnen Faserkerne kann im Bildbereich die aus den Einzelspots zusammengesetzte, angepasste Intensitätsverteilung eingestellt werden, zum Beispiel in Form einer durch Einzelspots angenäherten Linie. Durch die flexible Einkopplung wird das resultierende Intensitätsprofil an die Werkstückdicke angepasst: Bei Einkopplung allein in den zentralen Kern (z.B. mit 100 µm Durchmesser) erhält man einen einzelnen Fokuspunkt auf dem Werkstück. Dies ist günstig zum Schneiden dünner Werkstücke bis zu einer Dicke von 6 mm. Wird die Laserstrahlung auf mehrere Faserkerne verteilt, so entsteht ein lineares, nicht-rotationssymmetrisches Strahlprofil, das in der Schneideinheit entsprechend der Vorschubrichtung mitgedreht werden muss, z.B. über ein Doveprisma oder eine Kombination von Zylinderlinsen. Im mittleren Werkstückdickenbereich von 8-12 mm wird mit einer Einkopplung der Laserstrahlung in drei Faserkerne mit jeweils 100 µm Durchmesser und einer nachfolgenden 2:1 Abbildung des Ausgangslaserstrahls auf das Werkstück eine Linienlänge im Fokus-Bereich der aus den Faserkernen austretenden Teilstrahlen von etwa 650 µm erhalten. Bei einer Werkstückdicke von mehr als 12 mm ist es vorteilhaft, den Laserstrahl auf fünf Faserkerne aufzuteilen, um die Linienlänge weiter zu vergrößern. Die Laserleistung wird dabei vorzugsweise so auf die Faserkerne aufgeteilt, dass bei Werkstückdicken ab 8 mm im mittleren Faserkern weniger Laserleistung eingekoppelt wird als in einem oder mehreren der äußeren Faserkerne. Versuche mit drei kollinear angeordneten Fokuspunkten mit einer Leistungsverteilung von 40 : 20 : 40 haben eine deutliche Vorschubsteigerung beim Schneiden von Edelstahl (Größenordnung + 60 %) gezeigt. Auch eine Leistungsverteilung von 50 : 30 : 20 ist vorteilhaft, da weiter hinten und unten im Schnittspalt ein weniger starker Wärmeeintrag notwendig ist, weil die Schmelze selbst schon Wärme nach unten transportiert.

In einer anderen bevorzugten Verfahrensvariante weisen zumindest einige der Faserkerne, insbesondere alle Faserkerne, unterschiedliche Durchmesser auf. Wenn die Durchmesser der Faserkerne entlang der geraden Linie in einer Richtung abnehmen, kann die Multikernfaser beim Laserschneiden jeweils so mitgedreht werden, dass der Durchmesser der Kerne entgegen der Schnittrichtung entweder abnimmt oder ansteigt. Besonders bevorzugt wird die Laserstrahlung mit jeweils gleicher Leistung in die unterschiedlichen Faserkerne eingekoppelt.

Wenn beispielsweise der Durchmesser der Faserkerne entgegen der Schnittrichtung abnimmt, z.B. 150 / 100 / 75 / 50 µm, dann kann das System so ausgelegt werden, dass der Durchmesser aller Teilstrahlen am Auftreffpunkt auf der geneigten Schneidfront annähernd gleich ist, wenn alle Teilstrahlen auf die Werkstückoberseite fokussiert werden. Dann verlaufen die Schnittspaltwände senkrecht und weisen keine durch die Strahlkaustik bedingte Krümmung auf. Außerdem ist beim Schneiden von Werkstücken mit größerer Werkstückdicke eine größere Schnittspaltbreite erwünscht, um eine bessere Gaseinkopplung in den Schnittspalt, ein besseres Austreiben der Schmelze und eine bessere Entnehmbarkeit der geschnittenen Teile aus dem Restwerkstück zu erreichen. Daher wird bei kleiner Werkstückdicke Laserleistung nur in den kleinsten bzw. die beiden kleinsten Faserkerne eingekoppelt, während bei größerer Werkstückdicke auch Laserleistung in die Faserkerne mit größerem Durchmesser eingekoppelt wird.

Auch eine Variante mit entgegen der Schneidrichtung ansteigenden Durchmessern der Faserkerne kann sich vorteilhaft auf die Schnittqualität auswirken. Wenn beispielsweise der Durchmesser der Faserkerne entgegen der Schnittrichtung zunimmt, z.B. 100 / 150 / 200 / 250 µm, dann wird auf diese Weise der Schnittspalt nach und nach aufgeweitet. Jeder Teilstrahl schneidet das Werkstück vollständig durch und erzeugt dabei jeweils nur wenig Schmelze, die laminar nach unten strömt. Die so gebildeten Schnittkanten weisen nur eine geringe Kantenrauheit auf, allerdings ist die maximal mögliche Schneidgeschwindigkeit bei dieser Verfahrensvariante geringer.

Vorzugsweise werden Laserstrahlen mit unterschiedlichen Strahldivergenzen in Faserkerne mit unterschiedlichen Durchmessern eingekoppelt, beispielsweise durch Linsen mit unterschiedlicher Einkoppelbrennweite. Dadurch verschlechtert sich die Strahlqualität beim Einkoppeln in größere Faserkerne möglichst wenig. Wird beispielsweise in einen 50µm-Kern mit 100 mrad eingekoppelt, sollte in den 75µm-Kern mit 67 mrad eingekoppelt werden. Dann ist das Strahlparameterprodukt in beiden Kernen gleich. Für noch größere Faserkerne muss eine gewisse Verschlechterung der Strahlqualität akzeptiert werden, da ansonsten die notwendige Einkoppeldivergenz zu klein wäre. Dies hat allerdings nur einen vernachlässigbaren Einfluss auf die Schneidqualität, da die größeren Spots an der Werkstückoberfläche absorbiert werden und die Divergenz hier keine große Rolle spielt.

Vorzugsweise werden unterschiedliche Moden unterschiedlicher Strahlqualität des mindestens einen Laserstrahls in unterschiedliche Faserkerne, insbesondere in Faserkerne mit unterschiedlichen Durchmessern, eingekoppelt. Wenn beispielsweise die Strahlqualität des einzukoppelnden Laserstrahls eigentlich einen minimalen Faserdurchmesser von 100 µm bedingt, so können die im Laserstrahl enthaltenen Moden niedriger Ordnung (d.h. mit deutlich besserer Strahlqualität) in Fasern mit einem Durchmesser < 100 µm eingekoppelt werden. Die von den Moden höherer Ordnung verbleibenden Leistungsanteile werden in Fasern mit mindestens 100 µm Durchmesser gelenkt. Die unterschiedlichen Moden können auch in Faserkerne gleichen Durchmessers eingekoppelt werden, wodurch die jeweiligen Ausgangslaserstrahlen ebenfalls unterschiedliche Strahlqualitäten aufweisen.

Die Erfindung betrifft auch eine Vorrichtung zum Laserschneiden, von Werkstücken mittels mindestens eines Laserstrahls, mit einer Multikernfaser, welche mehrere, insbesondere mindestens drei, parallel, entlang einer geraden Linie nebeneinander angeordnete Faserkerne aufweist, zum Führen des mindestens einen Laserstrahls in Richtung zu einem Werkstück, mit einer Einkoppeleinrichtung, die den mindestens einen Laserstrahl in einen oder mehrere der Faserkerne einkoppelt und/oder die Laserleistung des mindestens einen Laserstrahls auf die Faserkerne variabel aufteilt, und mit einer Maschinensteuerung, die programmiert ist, das Verfahren in den vorhergehendbeschriebenen Varianten auszuführen, siehe Anspruch 8.

Die mehreren Faserkerne können entweder den gleichen Durchmesser oder aber unterschiedliche Durchmesser aufweisen, die insbesondere entlang der geraden Linie in einer Richtung abnehmen.

In einer bevorzugten Ausführungsvariante können die austrittsseitigen Faserenden der mehreren Faserkerne in Faserlängsrichtung zueinander versetzt angeordnet sein, so dass die Fokuspunkte der aus den Faserkernen austretenden Teilstrahlen am Werkstück sowohl horizontal als auch vertikal zueinander versetzt sind. Durch den Versatz der Faserenden werden die einzelnen Laserstrahlen nicht in die gleiche Ebene fokussiert. Je kleiner der Abstand vom Faserende zur Kollimationslinse im Bearbeitungskopf ist, umso tiefer liegt der jeweilige Fokus. Dadurch können die Fokuspositionen entsprechend der Schneidfrontneigung versetzt werden, so dass die maximale Intensität der Teilstrahlen jeweils direkt am Ort der Schneidfront auf das Werkstück einwirkt und die Schneidgeschwindigkeit gesteigert werden kann. Der Multikernfaser kann vorteilhaft eine Umsortieroptik vorgeordnet sein, die unterschiedliche Moden unterschiedlicher Strahlqualität des mindestens einen Laserstrahls in unterschiedliche Faserkerne, insbesondere in Faserkerne mit unterschiedlichen Durchmessern, "umsortiert". Es werden gezielt die im Laserstrahl enthaltenen Moden niedriger Ordnung (d.h. mit deutlich besserer Strahlqualität) in Faserkerne mit einem kleinen Durchmesser eingekoppelt. Dies kann beispielsweise durch eine Zonenlinse erreicht werden, die konzentrisch angeordnete Bereiche mit unterschiedlicher Neigung relativ zur Strahlachse des Laserstrahls aufweist. Beim Durchtritt durch die Zonenlinse werden Teilbereiche des Eingangslaserstrahls unterschiedlich auf die verschiedenen Kerne der Faser abgelenkt.

Bevorzugt weist die Laserbearbeitungsvorrichtung einen insbesondere gegenüber dem Werkstück bewegbaren Bearbeitungskopf auf, an dem zumindest die austrittsseitigen Faserenden der Faserkerne befestigt sind.

Die Erfindung betrifft schließlich auch ein Computerprogrammprodukt, siehe Anspruch 14, welches Codemittel aufweist, die zum Durchführen aller Schritte des erfindungsgemäßen Verfahrens angepasst sind, wenn das Programm auf einer Maschinensteuerung einer Laserbearbeitungsmaschine abläuft.

Weitere Vorteile und vorteilhafte Ausgestaltungen des Gegenstands der Erfindung sind der Beschreibung, den Zeichnungen und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: schematisch eine erfindungsgemäße Laserbearbeitungsmaschine mit einer Multikernfaser;
- Fig. 2: den geometrischen Zusammenhang zwischen einer von einem linienförmigen Laserstrahl erzeugten Schneidfront, der Werkstückdicke und der Linienlänge des Laserstrahls;
- Fig. 3: den Absorptionsgrad von Festkörperlaserstrahlung in Stahl in Abhängigkeit vom Schneidfrontwinkel;
- Fign. 4a-4e: den Querschnitt einer Multikernfaser mit fünf Faserkernen (Fig. 4a), die jeweils den gleichen Durchmesser aufweisen, sowie die Leistungsaufteilung auf die fünf Faserkerne für unterschiedliche Werkstückdicken (Fign. 4b-4e);
- Fign. 5a-5c: den Querschnitt einer Multikernfaser mit vier Faserkernen (Fig. 5a), die jeweils abnehmende Kerndurchmesser aufweisen, die Ausrichtung der Multikernfaser mit entgegen der Schneidrichtung abnehmenden Kerndurchmessern (Fig. 5b) und die geneigte Schneidfront mit den Ausgangslaserstrahlen der vier Faserkerne (Fig. 5c);
- Fign. 6a, 6b: einen Querschnitt einer Multikernfaser mit vier Faserkernen (Fig. 6a), die jeweils zunehmende Kerndurchmesser aufweisen, und die Ausrichtung der Multikernfaser mit entgegen der Schneidrichtung zunehmenden Kerndurchmessern (Fig. 6b);
- Fign. 7a-7c: einen Querschnitt einer Multikernfaser mit fünf Faserkernen (Fig. 7a), deren austrittsseitigen Faserenden jeweils in Faserlängsrichtung zueinander versetzt angeordnet sind (Fig. 7b), und die geneigte Schneidfront mit den Ausgangslaserstrahlen der fünf Faserkerne (Fig. 7c);
- Fign. 8a, 8b: einen Querschnitt einer Multikernfaser mit vier Faserkernen, deren Kerndurchmesser entgegen der Schneidrichtung abnehmen und deren austrittsseitige Faserenden jeweils in Faserlängsrichtung zueinander versetzt angeordnet sind (Fig. 8a), und die geneigte Schneidfront mit den Ausgangslaserstrahlen der vier Faserkerne (Fig. 8b); und
- Fig. 9: eine Umsortieroptik zum Umsortieren der Moden des Laserstrahls auf die Faserkerne der Multikernfaser.

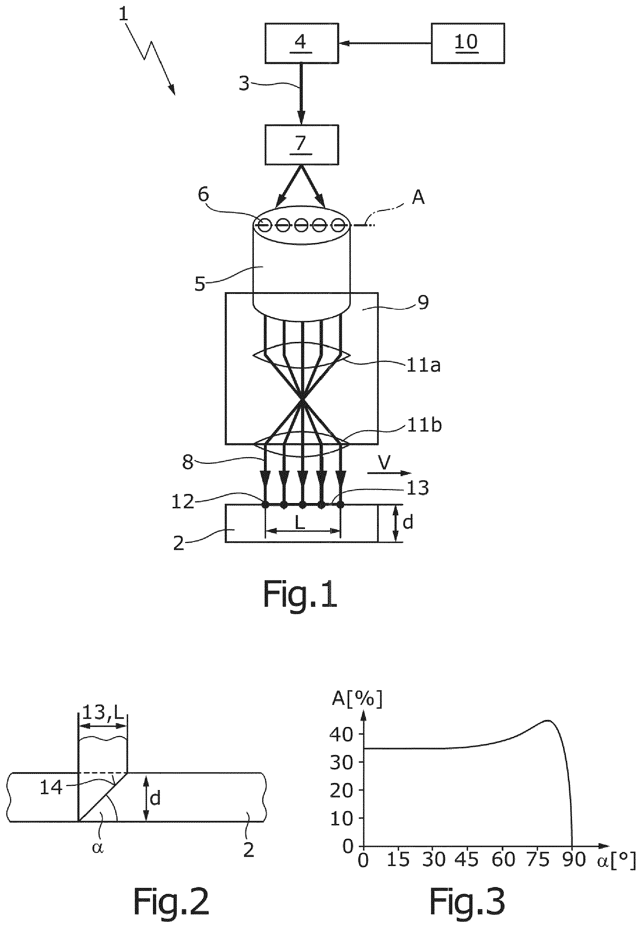

Die in **Fig. 1** gezeigte Vorrichtung **1** dient zum Laserschneiden von Werkstücken **2** mittels mindestens eines Laserstrahls **3** und umfasst
- einen Laserstrahlerzeuger **4** zum Erzeugen des Laserstrahls 3,
- eine Multikernfaser **5,** welche mehrere parallel, entlang einer geraden Linie A nebeneinander angeordnete Faserkerne **6** aufweist, zum Führen des mindestens einen Laserstrahls 3 in Richtung zu einem Werkstück 2,
- eine Einkoppeloptik **7,** die den Laserstrahl 3 in einen oder mehrere der Faserkerne 6 einkoppelt, um entweder einen oder mehrere aus der Multikernfaser austretende Ausgangslaserstrahlen **8** zu erzeugen, deren Strahlachsen in einer Ebene verlaufen und auf der Werkstückoberfläche in einer geraden Linie **13** angeordnet sind, und die die Laserleistung des Laserstrahls 3 auf die Faserkerne 6 variabel aufteilen kann,
- einen Bearbeitungskopf **9,** an dem die Multikernfaser 5 befestigt ist und in dem optische Elemente (z.B. Kollimationslinse **11a** und Fokussierlinse **11b**) zur Abbildung der Ausgangslaserstrahlen 8 auf das Werkstück 2 angeordnet sind, wobei Werkstück 2 und Bearbeitungskopf 9 relativ zueinander bewegbar sind, um die Ausgangslaserstrahlen 8 auf dem Werkstück 2 in einer Vorschub- bzw. Schneidrichtung **v** zu bewegen, und
- eine Maschinensteuerung **10,** die den Laserstrahlerzeuger 4 und die Einkoppeleinrichtung 7 ansteuert.

Die Multikernfaser 5 kann durch eine einzige Faser mit mehreren Faserkernen 6 und einem gemeinsamen Cladding oder alternativ durch mehrere Einzelfasern, die jeweils einen Faserkern mit einem eigenen Cladding aufweisen, ausgebildet sein.

Die Aufteilung des Laserstrahls 3 auf die verschiedenen Faserkerne 3 kann beispielsweise durch hintereinander im Strahlengang des Laserstrahls 3 angeordnete Keilplatten, wie sie beispielsweise in WO 2011/124671 A1 (Fig. 3) gezeigt sind, erfolgen. Alternativ können verschiedene Module eines Faserlasers über einzelne Übertragungsfasern ("feed fibers") an die Faserkerne der Mehrkernfaser 5 gespleißt werden, wie es beispielsweise in WO 2014/118516 A1 gezeigt ist. Jeder Ausgangslaserstrahl 8 erzeugt über eine im Bearbeitungskopf 8 befindliche Abbildungsoptik (Kollimations- und Fokussierlinse oder Zoom-Teleskop) 11a, 11b im Bildbereich einen separaten Fokuspunkt (Einzelspot) **12.**

Erfindungsgemäß wurde erkannt, dass zur Verbesserung der Produktivität des Schneidprozesses und der Schneidqualität die Länge **L** der aus den einzelnen Ausgangslaserstrahlen 8 gebildeten Linie **13** veränderbar sein muss, um an die Werkstückdicke **d** angepasst werden zu können. Ziel ist es dabei, einen maximalen Absorptionsgrad der Laserstrahlung auf der gesamten Schneidfront zu erreichen. Wie in **Fig. 2** gezeigt, gilt für den Zusammenhang zwischen der Dicke d des zu schneidenden Werkstücks 2 und der erforderlichen Länge L der Laserlinie 13 bei einer unter einem Schneidfrontwinkel **α** geneigten Schneidfront **14:** L = d/tan(α). Wie in **Fig. 3** gezeigt, gilt für das Schneiden von Stahl mit Festkörperlaserstrahlung, dass ein maximaler Absorptionsgrad **A** = 45 % für einen Schneidfrontwinkel α = 79° erzielt wird. Für diesen Schneidfrontwinkel α von 79° ergibt sich für die erforderliche Länge L der Laserlinie 13: L = d/tan(79°) = 0.2 d. Bei einem Werkstück 2 mit einer Dicke von 10 mm sollte die Länge L also 2 mm lang sein, was in der Praxis zu lang ist. Wählt man hingegen α = 85°, geht der resultierende Absorptionsgrad A nur um 5 Prozentpunkte auf A = 40 % zurück. Die für diesen Schneidfrontwinkel erforderliche Linienlänge ist mit L = 0.09 d wesentlich kürzer, beträgt für ein 10 mm dickes Werkstück also 900 µm.

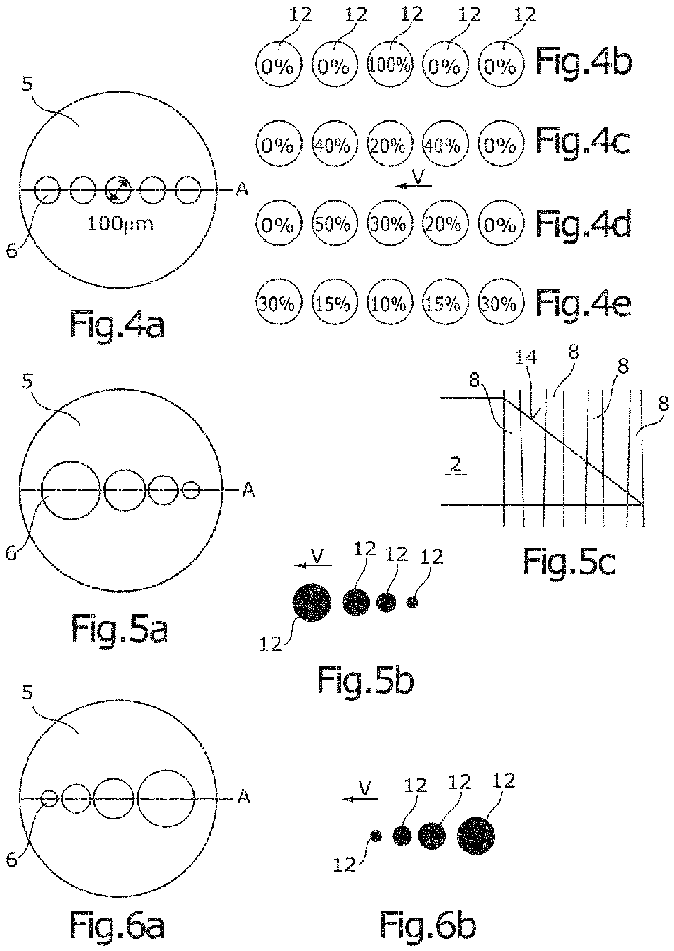

Die in **Fig. 4a** gezeigte Multikernfaser 5 weist fünf in der Linie A linear angeordnete Faserkerne 6 mit jeweils gleichem Durchmesser (z.B. 100 µm) auf, die in möglichst geringem Abstand zueinander (z.B. 10 µm) angeordnet sind. Durch Einkopplung des oder mehrerer Laserstrahlen 3 mit variabler Leistungsaufteilung in die einzelnen Faserkerne 6 kann im Bildbereich die aus den Einzelspots 12 zusammengesetzte, angepasste Intensitätsverteilung eingestellt werden, zum Beispiel in Form einer durch die Einzelspots 12 angenäherten Linie 13. Durch die flexible Einkopplung wird das resultierende Intensitätsprofil an die Werkstückdicke d angepasst. Bei Einkopplung allein in den zentralen Faserkern 6 erhält man einen Einzelspot 12 auf dem Werkstück 2 (**Fig. 4b**), was günstig zum Schneiden dünner Werkstücke 2 bis zu einer Werkstückdicke d von 6 mm ist. Wird der Laserstrahl 3 auf mehrere Faserkerne 6 verteilt, so entsteht eine Linie 13 mit drei Einzelspots 12, also ein lineares, nicht-rotationssymmetrisches Strahlprofil, das im Bearbeitungskopf 9 entsprechend der Vorschubrichtung v mitgedreht werden muss, z.B. über ein Doveprisma (gezeigt z.B. in US 2018/0185960 A1) oder eine Kombination von Zylinderlinsen. Im mittleren Werkstückdickenbereich von 8-12 mm wird mit einer Einkopplung des Eingangslaserstrahls in drei Faserkerne 6 und einer nachfolgenden 2:1-Abbildung der Ausgangslaserstrahlen 8 auf das Werkstück 2 in der Fokusebene der Ausgangslaserstrahlen 8 eine Linienlänge im Bereich von 640 µm erhalten (**Fign. 4c**, **4d**). Unter Beachtung der Divergenz der einzelnen Ausgangslaserstrahlen 8 und dem daraus resultierenden Aufweiten des in Vorschubrichtung hintersten Ausgangslaserstrahls 8 bis zur Blechunterseite ergibt sich eine effektive Linienlänge L im Bereich von 900 µm. Bei einer Werkstückdicke d von mehr als 12 mm ist es vorteilhaft, den Laserstrahl 3 auf fünf Faserkerne aufzuteilen (**Fig. 4e**), z.B. mit einer Leistungsverteilung von 30: 15 : 10 : 15 : 30, um die Linienlänge L weiter zu vergrößern. Die Laserleistung wird dabei vorzugsweise so auf die Faserkerne 6 aufgeteilt, dass bei Werkstückdicken d ab 8 mm im mittleren Faserkern 6 weniger Laserleistung eingekoppelt wird als in einem oder mehreren der äußeren Faserkerne 6. Mit zunehmender Werkstückdicke d wird somit die Laserleistung auf eine steigende Zahl von Faserkernen 6 aufgeteilt und zunehmend in die entlang der geraden Linie A außenliegenden Faserkerne 6 eingekoppelt. Versuche mit drei Einzelspots 12 mit einer Leistungsverteilung von 40 : 20 : 40 (Fig. 4c) haben eine deutliche Vorschubsteigerung beim Schneiden von Edelstahl (Größenordnung + 60 %) gezeigt. Auch eine Leistungsverteilung von 50 : 30 : 20 (Fig. 4d) ist vorteilhaft, da in Schneidrichtung v weiter hinten und in Strahlrichtung weiter unten im Schnittspalt ein weniger starker Wärmeeintrag notwendig ist, weil die Schmelze selbst schon Wärme nach unten transportiert.

Die in **Fig. 5a** gezeigte Multikernfaser 5 weist vier in der Linie A linear angeordnete Faserkerne 6 auf, deren Kerndurchmesser (z.B. 150 / 100 / 75 / 50 µm) entlang der geraden Linie A in einer Richtung abnehmen. Dabei kann die Laserstrahlung beispielsweise mit jeweils gleicher Leistung in die vier Faserkerne 6 eingekoppelt werden. In **Fig. 5b** ist die Multikernfaser 5 derart ausgerichtet, dass die Kerndurchmesser bzw. die Einzelspots 12 entgegen der Schneidrichtung v abnehmen. Wie in **Fig. 5c** gezeigt, kann das System so ausgelegt werden, dass der Durchmesser aller Ausgangslaserstrahlen 8 am Auftreffpunkt auf der geneigtem Schneidfront 14 annähernd gleich ist, wenn alle Ausgangslaserstrahlen 8 gemeinsam auf die Werkstückoberseite fokussiert werden. Dann verlaufen die Schnittspaltwände senkrecht und weisen keine durch die Strahlkaustik bedingte Krümmung auf. Außerdem ist beim Schneiden von Werkstücken 2 mit größerer Werkstückdicke d eine größere Schnittspaltbreite erwünscht, um eine bessere Gaseinkopplung in den Schnittspalt, ein besseres Austreiben der Schmelze und eine bessere Entnehmbarkeit der geschnittenen Teile aus dem Restwerkstück zu erreichen. Daher wird bei kleiner Werkstückdicke d vorteilhaft die Laserleistung nur in den kleinsten bzw. die beiden kleinsten Faserkerne 6 eingekoppelt, während bei größerer Werkstückdicke auch Laserleistung in die Faserkerne 6 mit größerem Durchmesser eingekoppelt werden kann.

Vorzugsweise wird in die einzelnen Faserkerne 6 mit unterschiedlicher Strahldivergenz eingekoppelt, beispielsweise durch Linsen mit unterschiedlicher Einkoppelbrennweite. Dadurch verschlechtert sich die Strahlqualität beim Einkoppeln in größere Faserkerne 6 möglichst wenig. Wird beispielsweise in einen 50µm-Faserkern mit 100 mrad eingekoppelt, sollte in den 75µ-Faserkern mit 67 mrad eingekoppelt werden. Dann ist das Strahlparameterprodukt in beiden Faserkernen gleich. Für noch größere Faserkerne muss eine gewisse Verschlechterung der Strahlqualität akzeptiert werden, da ansonsten die notwendige Divergenz zu klein wäre. Dies hat allerdings nur einen vernachlässigbaren Einfluss auf die Schneidqualität, da die größeren Einzelspots 12 an der Werkstückoberfläche absorbiert werden und die Divergenz hier keine große Rolle spielt.

Die in **Fig. 6a** gezeigte Multikernfaser 5 weist vier in der Linie A linear angeordnete Faserkerne 6 auf, deren Kerndurchmesser (z.B. 100 / 150 / 200 / 250 µm) entlang der geraden Linie A in einer Richtung abnehmen. In **Fig. 6b** ist die Multikernfaser 5 derart ausgerichtet, dass die Kerndurchmesser bzw. die Einzelspots 12 entgegen der Schneidrichtung v zunehmen. Auf diese Weise wird der Schnittspalt in Schneidrichtung v nach und nach aufgeweitet, was sich vorteilhaft auf die Schnittqualität auswirkt. Jeder Ausgangslaserstrahl 8 schneidet das Werkstück 2 vollständig durch und erzeugt dabei jeweils nur wenig Schmelze, die laminar nach unten strömt. Die so gebildeten Schnittkanten weisen nur eine geringe Kantenrauheit auf, allerdings ist die maximal mögliche Schneidgeschwindigkeit bei dieser Verfahrensvariante geringer.

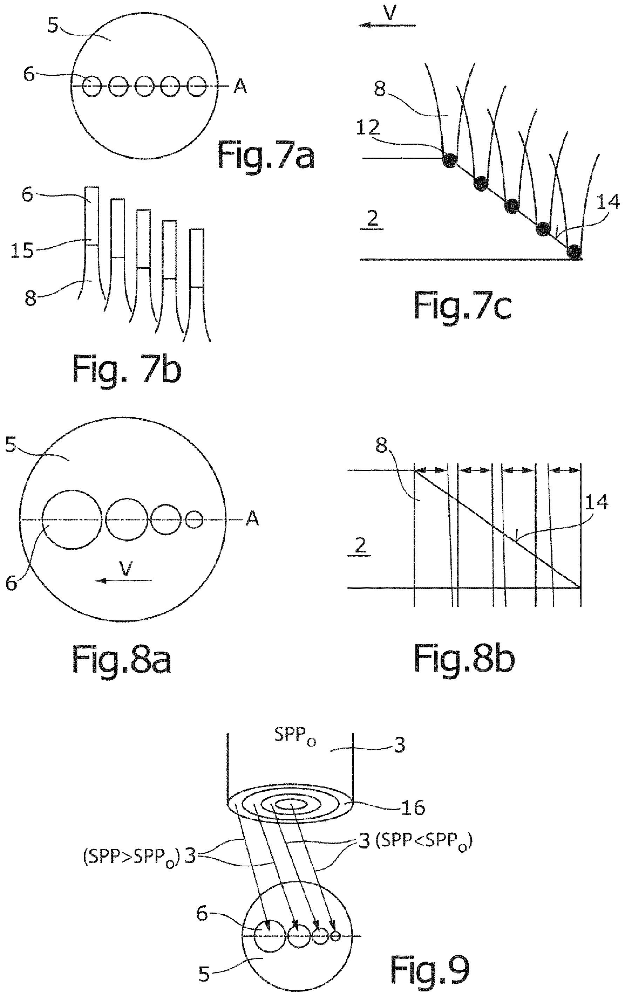

Wie in **Fign. 7a-7c** gezeigt, können die austrittsseitigen Faserenden **15** der Faserkerne 6 in Faserlängsrichtung zueinander versetzt angeordnet sein, so dass die Fokuspunkte 12 der aus den Faserkernen 6 austretenden Ausgangslaserstrahlen 8 im Werkstück 2 sowohl in Schneidrichtung v horizontal als auch in Strahlrichtung vertikal zueinander versetzt sind. Durch den Versatz der Faserenden 15 werden die einzelnen Ausgangslaserstrahlen 8 nicht in die gleiche Ebene fokussiert. Je kleiner der Abstand vom Faserende 15 zur Kollimationslinse im Bearbeitungskopf 9 ist, umso tiefer liegt der jeweilige Fokuspunkt 12. Dadurch können die Fokuspunkte 12 in der Tiefe entsprechend der Schneidfrontneigung versetzt werden, so dass die maximale Intensität der Ausgangslaserstrahlen 8 jeweils direkt am Ort der geneigten Schneidfront 12 auf das Werkstück 2 einwirkt und die Schneidgeschwindigkeit v gesteigert werden kann. Bei gleichem Durchmesser der Faserkerne 6 passen die in Schneidrichtung v hinteren Ausgangslaserstrahlen 8 nicht vollständig in den durch die vorlaufenden Ausgangslaserstrahlen 8 erzeugten Schnittspalt, so dass relativ viel Leistung bereits an der Werkstückoberseite absorbiert wird. Dieser Effekt wird vermieden, wenn die hinteren Ausgangslaserstrahlen 8 einen zunehmend geringeren Strahldurchmesser aufweisen. Daher ist es vorteilhaft, wenn die Durchmesser der Faserkerne 6 entgegen der Schnittrichtung v abnehmen (**Fign. 8a, 8b**). Vorzugsweise wird, wie weiter oben beschrieben, die Einkoppeldivergenz der Ausgangslaserstrahlen 8 so variiert, dass das Strahlparameterprodukt in allen Faserkernen 6 gleich ist und so die Strahlqualität erhalten bleibt.

Die Strahlqualität eines Laserstrahls 3 kann beim Aufteilen des Laserstrahls 3 auf die verschiedenen Faserkerne 6 "umsortiert" werden, d.h., es werden gezielt die im Laserstrahl 3 enthaltenen Moden niedriger Ordnung (d.h. mit deutlich besserer Strahlqualität) in Faserkerne 6 eingekoppelt, die in Vorschubrichtung weiter hinten liegende Spots erzeugen, um deren Tiefenwirkung im Schnittspalt zu verbessern. Dies kann beispielsweise durch eine in **Fig. 9** als Zonenlinse ausgebildete Umsortieroptik **16** erreicht werden, die konzentrisch angeordnete Bereiche mit unterschiedlicher Neigung relativ zur Strahlachse des Laserstrahls 3 aufweist. Beim Durchtritt durch die Zonenlinse 16 werden Teilbereiche des Laserstrahls 3 unterschiedlich auf die verschiedenen Faserkerne 6 abgelenkt. Wenn beispielsweise die Strahlqualität SPP₀ des eingesetzten Laserstrahls 3 bei einer festgelegten Einkoppeldivergenz eigentlich einen minimalen Faserdurchmesser von 100 µm bedingt, so können die im Laserstrahl 3 enthaltenen Moden niedriger Ordnung (d.h. mit kleinerem Durchmesser und deutlich besserer Strahlqualität SPP < SPP₀) in Faserkerne 6 mit einem Durchmesser < 100 µm eingekoppelt werden, ohne dass die Einkoppeldivergenz wesentlich zunimmt. Die von den Moden höherer Ordnung verbleibenden Leistungsanteile werden in Faserkerne 6 mit mindestens 100 µm Durchmesser gelenkt. Da diese in Vorschubrichtung weiter vorne liegende Spots erzeugen, die weiter oben auf der Schneidfront absorbiert werden, spielt bei diesen eine Zunahme der Strahldivergenz eine untergeordnete Rolle.

Dadurch, dass die Leistungsanteile besserer Strahlqualität mit kleinerer Divergenz in die in Vorschubrichtung hinteren Faserkerne 6 eingekoppelt werden können, wird auch nach der Multikernfaser 5 ein "schlankerer" Ausgangslaserstrahl 8 geringerer Divergenz erhalten. Dabei ist es das Ziel, alle Ausgangslaserstrahlen 8 mit derselben Abbildungsoptik 11a, 11b im Bearbeitungskopf 9 auf die Werkstückoberseite zu fokussieren und trotzdem sicherzustellen, dass zum einen auf der geneigten Schneidfront 14 der Strahldurchmesser eine bestimmte Größe (z.B. 400 µm) nicht überschreitet, und zum anderen die in Vorschubrichtung weiter hinten liegenden Einzelstrahlen nicht bereits an der Blechoberseite (teilweise) absorbiert werden. Durch einen schlankeren Ausgangslaserstrahl 8 mit geringer Divergenz kann man dies auch in tieferer Lage im Werkstück 2, d.h. für größere Werkstückdicken d, noch erreichen. Mit dieser Verfahrensvariante wird die Gratbildung auf der Schnittkante bei gleichbleibender Schneidgeschwindigkeit v (also gleichbleibender Produktivität) deutlich verringert.

Statt wie oben beschrieben in Abhängigkeit von der Werkstückdicke d können die Zahl der Faserkerne 6, in die der Laserstrahl 3 eingekoppelt wird, und/oder die Aufteilung der Laserleistung des Laserstrahls 3 auf die Faserkerne 6 in Abhängigkeit von anderen Werkstückeigenschaften, wie z.B. Material, Oberflächenbeschaffenheit, etc., oder von einem Bearbeitungsparameter, wie z.B. Vorschubgeschwindigkeit, Laserleistung, Schnittkontur, Laserwellenlänge, Prozessgas, etc., eingestellt werden.

Statt wie oben beschrieben einen einzigen Laserstrahl mittels Strahlteiler auf die einzelnen Faserkerne 6 aufzuteilen, können alternativ auch mehrere unterschiedliche Laserstrahlen 3, insbesondere mit jeweils unterschiedlicher Laserleistung, in die einzelnen Faserkerne 6 eingekoppelt werden.

## Patentansprüche

1. Verfahren zum Laserschneiden von Werkstücken (2) mittels mindestens eines Laserstrahls (3), der in einer Multikernfaser (5), welche mehrere, insbesondere mindestens drei, parallel, entlang einer geraden Linie (A) nebeneinander angeordnete Faserkerne (6) aufweist, in Richtung zu einem Werkstück (2) geführt wird,
**dadurch gekennzeichnet,**
**dass** der mindestens eine Laserstrahl (3) in mehrere der Faserkerne (6) eingekoppelt wird, um mehrere aus der Multikernfaser (5) austretende Ausgangslaserstrahlen (8) zu erzeugen, deren Strahlachsen in einer Ebene verlaufen und auf dem Werkstück (2) in einer geraden Linie (13) angeordnet sind, wobei während des Laserschneidens die gerade Linie (13) der Ausgangslaserstrahlen (8) jeweils in diejenige Richtung, in der sich der Laserstrahl (3) auf dem Werkstück (2) bewegt, gedreht wird,
**dass** die Zahl der Faserkerne (6), in die der mindestens eine Laserstrahl (3) eingekoppelt wird, und/oder die Aufteilung der Laserleistung des mindestens einen Laserstrahls (3) auf die Faserkerne (6) in Abhängigkeit von einer Werkstückeigenschaft eingestellt wird, und
**dass** mit zunehmender Werkstückdicke (d) die Laserleistung des mindestens einen Laserstrahls (3) auf eine steigende Zahl von Faserkernen (6) aufgeteilt wird und/oder dass mit zunehmender Werkstückdicke (d) die Laserleistung des mindestens einen Laserstrahls (3) zunehmend in die entlang der geraden Linie (A) außenliegenden Faserkerne (6) eingekoppelt wird.

2. Verfahren nach Anspruch 1, **dadurch gekennzeichnet, dass** mehrere, insbesondere unterschiedliche, Laserstrahlen (3) in die Faserkerne (6) eingekoppelt werden.

3. Verfahren nach Anspruch 1 oder 2, **dadurch gekennzeichnet, dass** alle Faserkerne (6) den gleichen Durchmesser aufweisen.

4. Verfahren nach Anspruch 1 oder 2, **dadurch gekennzeichnet, dass** zumindest einige der Faserkerne (6), insbesondere alle Faserkerne (6), unterschiedliche Durchmesser aufweisen.

5. Verfahren nach Anspruch 4, **dadurch gekennzeichnet, dass** die Durchmesser der Faserkerne (6) entlang der geraden Linie (A) in einer Richtung abnehmen.

6. Verfahren nach einem der vorhergehenden Ansprüche, **dadurch gekennzeichnet, dass** Laserstrahlen (3) mit unterschiedlichen Strahldivergenzen in Faserkerne (6) mit unterschiedlichen Durchmessern eingekoppelt werden.

7. Verfahren nach einem der vorhergehenden Ansprüche, **dadurch gekennzeichnet, dass** unterschiedliche Moden unterschiedlicher Strahlqualität des mindestens einen Laserstrahls (3) in unterschiedliche Faserkerne (6) eingekoppelt werden.

8. Vorrichtung (1) zum Laserschneiden von Werkstücken (2) mittels mindestens eines Laserstrahls (3),
mit einer Multikernfaser (5), welche mehrere, insbesondere mindestens drei, parallel, entlang einer geraden Linie (A) nebeneinander angeordnete Faserkerne (6) aufweist, zum Führen des mindestens einen Laserstrahls (3) in Richtung zu einem Werkstück (2),
mit einer Einkoppeloptik (7), die den mindestens einen Laserstrahl (3) in einen oder mehrere der Faserkerne (6) einkoppelt und/oder die Laserleistung des mindestens einen Laserstrahls (3) auf die Faserkerne (6) variabel aufteilt, und
**gekennzeichnet durch**:
eine Maschinensteuerung (10), die programmiert ist, das Verfahren nach einem der vorhergehenden Ansprüche auszuführen.

9. Vorrichtung nach Anspruch 8, **dadurch gekennzeichnet, dass** die mehreren Faserkerne (6) den gleichen Durchmesser aufweisen.

10. Vorrichtung nach Anspruch 8, **dadurch gekennzeichnet, dass** die mehreren Faserkerne (6) unterschiedliche Durchmesser aufweisen, die insbesondere entlang der geraden Linie (A) in einer Richtung abnehmen.

11. Vorrichtung nach einem der Ansprüche 8 bis 10, **dadurch gekennzeichnet, dass** die austrittsseitigen Faserenden (15) der mehreren Faserkerne (6) in Faserlängsrichtung zueinander versetzt angeordnet sind.

12. Vorrichtung nach einem der Ansprüche 8 bis 11, **dadurch gekennzeichnet, dass** der Multikernfaser eine Umsortieroptik (16) vorgeordnet ist, welche unterschiedliche Moden unterschiedlicher Strahlqualität des mindestens einen Laserstrahls (3) in unterschiedliche Faserkerne (6) einkoppelt.

13. Vorrichtung nach einem der Ansprüche 8 bis 12, **dadurch gekennzeichnet, dass** zumindest die austrittsseitigen Faserenden der Faserkerne (6) an einem, insbesondere gegenüber dem Werkstück (2) bewegbaren, Bearbeitungskopf (9) befestigt sind.

14. Computerprogrammprodukt, welches Codemittel aufweist, die zum Durchführen aller Schritte des Verfahrens nach einem der Ansprüche 1 bis 7 angepasst sind, wenn das Programm auf einer Maschinensteuerung (10) einer Laserbearbeitungsmaschine (1) abläuft.

## Claims

1. A method for laser cutting of workpieces (2) by means of at least one laser beam (3) guided in the direction of a workpiece (2) inside of a multi-core fiber (5) that has a plurality of, in particular at least three, parallel fiber cores (6) arranged next to one another along a straight line (A),
**characterized in that**
the at least one laser beam (3) is coupled into a plurality of the fiber cores (6) in order to generate a plurality of output laser beams (8) exiting the multi-core fiber (5), the beam axes of the laser beams running in a plane and being arranged on the workpiece (2) in a straight line (13), wherein during the laser cutting, the straight line (13) of the output laser beams (8), respectively, is rotated in the direction in which the respective laser beam (3) moves on the workpiece (2),
the number of fiber cores (6) into which the at least one laser beam (3) is coupled, and/or the subdivision of the laser power of the at least one laser beam (3) onto the fiber cores (6) is adjusted depending on a workpiece characteristic, and
as the workpiece thickness (d) increases, the laser power of the at least one laser beam (3) is subdivided onto an increasing number of fiber cores (6), and/or as the workpiece thickness (d) increases, the laser power of the at least one laser beam (3) is increasingly coupled into the fiber cores (6) lying on the outside along the straight line (A).

2. The method according to claim 1, **characterized in that** a plurality, in particular different, laser beams (3) are coupled into the fiber cores (6).

3. The method according to claim 1 or 2, **characterized in that** all fiber cores (6) have the same diameter.

4. The method according to claim 1 or 2, **characterized in that** at least some of the fiber cores (6), in particular all fiber cores (6), have different diameters.

5. The method according to claim 4, **characterized in that** the diameters of the fiber cores (6) decrease along the straight line (A) in one direction.

6. The method according to any one of the preceding claims, **characterized in that**, laser beams (3) with different beam divergences are coupled into fiber cores (6) with different diameters.

7. The method according to any one of the preceding claims, **characterized in that**, different modes of a different beam quality of the at least one laser beam (3) are coupled into different fiber cores (6).

8. A device (1) for laser cutting of workpieces (2) by means of at least one laser beam (3),
with a multi-core fiber (5) that has a plurality of, in particular at least three, parallel fiber cores (6) arranged next to one another along a straight line (A), for guiding the at least one laser beam (3) in the direction of a workpiece (2),
with an in-coupling optic (7) which couples the at least one laser beam (3) into one or more of the fiber cores (6) and/or variably subdivides the laser power of the at least one laser beam (3) onto the fiber cores (6), and
**characterized by**:
a machine controller (10) programmed to execute the method according to any one of the preceding claims.

9. The device according to claim 8, **characterized in that** the plurality of fiber cores (6) have the same diameter.

10. The device according to claim 8, **characterized in that** the plurality of fiber cores (6) have different diameters which, in particular, decrease along the straight line (A) in one direction.

11. The device according to any one of claims 8 to 10, **characterized in that** the fiber ends (15) of the plurality of fiber cores (6) on the exit side are arranged offset from one another in the fiber length direction.

12. The device according to any one of claims 8 to 11, **characterized in that** the multi-core fiber is arranged upstream of a re-sorting optic (16) that couples different modes of a different beam quality of the at least one laser beam (3) into different fiber cores (6).

13. The device according to any one of claims 8 to 12, **characterized in that** at least the fiber ends of the fiber cores (6) on the exit side are fastened to a machining head (9), in particular one that is movable relative to the workpiece (2).

14. A computer program product having coding means which are adapted to carry out all the steps of the method according to any one of claims 1 to 7 when the program is running on a machine controller (10) of a laser processing machine (1).

## Revendications

1. Procédé de découpe laser de pièces (2) au moyen d'au moins un faisceau laser (3), qui est guidé dans une fibre multicœur (5), laquelle présente plusieurs cœurs de fibre (6) disposés parallèlement, en particulier au moins trois, côte à côte le long d'une ligne droite (A), en direction d'une pièce (2),
**caractérisé en ce que**,
ledit au moins un faisceau laser (3) est couplé dans plusieurs des cœurs de fibre (6) afin de produire plusieurs faisceaux laser de sortie (8) sortant de la fibre multicœur (5), dont les axes de faisceau s'étendent dans un plan et sont disposés sur la pièce (2) selon une ligne droite (13), dans lequel la ligne droite (13) des faisceaux laser de sortie (8) est, pendant la découpe laser, tournée respectivement dans la direction dans laquelle le faisceau laser (3) se déplace sur la pièce (2),
le nombre de cœurs de fibre (6) dans lesquels ledit au moins un faisceau laser (3) est couplé, et/ou la répartition de la puissance laser dudit au moins un faisceau laser (3) sur les cœurs de fibre (6), est réglé en fonction d'une propriété de la pièce, et
avec l'augmentation de l'épaisseur de pièce (d), la puissance laser dudit au moins un faisceau laser (3) est répartie sur un nombre croissant de cœurs de fibre (6) et/ou qu'avec l'augmentation de l'épaisseur de pièce (d), la puissance laser dudit au moins un faisceau laser (3) est de plus en plus couplée dans les cœurs de fibre (6) situés extérieurement le long de la ligne droite (A).

2. Procédé selon la revendication 1, **caractérisé en ce que** plusieurs faisceaux laser (3), en particulier différents, sont couplés dans les cœurs de fibre (6).

3. Procédé selon la revendication 1 ou 2, **caractérisé en ce que** tous les cœurs de fibre (6) présentent le même diamètre.

4. Procédé selon la revendication 1 ou 2, **caractérisé en ce qu'**au moins certains des cœurs de fibre (6), en particulier tous les cœurs de fibre (6), présentent des diamètres différents.

5. Procédé selon la revendication 4, **caractérisé en ce que** les diamètres des cœurs de fibre (6) diminuent dans une direction le long de la ligne droite (A).

6. Procédé selon l'une quelconque des revendications précédentes, **caractérisé en ce que** des faisceaux laser (3) présentant des divergences de faisceau différentes sont couplés dans des cœurs de fibre (6) présentant des diamètres différents.

7. Procédé selon l'une quelconque des revendications précédentes, **caractérisé en ce que** différents modes de qualités de faisceau différentes dudit au moins un faisceau laser (3) sont couplés dans différents cœurs de fibre (6).

8. Dispositif (1) de découpe laser de pièces (2) au moyen d'au moins un faisceau laser (3),
avec une fibre multicœur (5), laquelle présente plusieurs cœurs de fibre (6) disposés parallèlement, en particulier au moins trois, côte à côte le long d'une ligne droite (A), pour guider ledit au moins un faisceau laser (3) en direction d'une pièce (2),
avec une optique de couplage (7) qui couple ledit au moins un faisceau laser (3) dans un ou plusieurs des cœurs de fibre (6) et/ou répartit de manière variable la puissance laser dudit au moins un faisceau laser (3) sur les cœurs de fibre (6), et
**caractérisé par** :
une commande de machine (10) qui est programmée pour exécuter le procédé selon l'une quelconque des revendications précédentes.

9. Dispositif selon la revendication 8, **caractérisé en ce que** les plusieurs cœurs de fibre (6) présentent le même diamètre.

10. Dispositif selon la revendication 8, **caractérisé en ce que** lesdits plusieurs cœurs de fibre (6) présentent des diamètres différents, lesquels diminuent en particulier dans une direction le long de la ligne droite (A).

11. Dispositif selon l'une quelconque des revendications 8 à 10, **caractérisé en ce que** les extrémités de fibre (15) situées côté sortie desdits plusieurs cœurs de fibre (6) sont disposées de manière décalée les unes par rapport aux autres dans la direction longitudinale de la fibre.

12. Dispositif selon l'une quelconque des revendications 8 à 11, **caractérisé en ce qu'**une optique de réaffectation (16) est disposée en amont de la fibre multicœur, laquelle couple différents modes de qualités de faisceau différentes dudit au moins un faisceau laser (3) dans différents cœurs de fibre (6).

13. Dispositif selon l'une quelconque des revendications 8 à 12, **caractérisé en ce qu'**au moins les extrémités de fibre situées côté sortie des cœurs de fibre (6) sont fixées à une tête d'usinage (9), en particulier mobile par rapport à la pièce (2).

14. Produit programme d'ordinateur, lequel présente des moyens de code adaptés pour réaliser toutes les étapes du procédé selon l'une quelconque des revendications 1 à 7 lorsque le programme s'exécute sur une commande de machine (10) d'une machine de traitement laser (1).
